# EUROPEAN PATENT SPECIFICATION

(11) **EP 3 080 645 B1**
(45) Date of publication and mention of the grant of the patent: **14.02.2018**
(21) Application number: 14850099.4
(22) Date of filing: 10.12.2014
(51) Int. Cl.: G01W 1/08, G01W 1/14

(54) **APPARATUS AND METHOD FOR LAGRANGIAN PRECIPITATION SENSING**
VORRICHTUNG UND VERFAHREN ZUR MESSUNG VON LAGRANGE-NIEDERSCHLAG
APPAREIL ET PROCÉDÉ POUR LA DÉTECTION LAGRANGIENNE DES PRÉCIPITATIONS

(30) Priority: 12.12.2013 US 201361915486 P
(43) Date of publication of application: 19.10.2016
(73) Proprietor: King Abdullah University of Science and Technology, Thuwal 23955-6900 (SA)
(72) Inventor: CLAUDEL, Christian, Thuwal 23955-6900 (SA); ABDELKADER, Mohamed, Thuwal 23955-6900 (SA); SHAQURA, Mohammad, Thuwal 23955-6900 (SA); HOTEIT, Ibrahim, Thuwal 23955-6900 (SA)
(74) Representative: Feray, Valérie
(86) International application number: PCT/IB2014/003157
(87) International publication number: WO 2015/087167

(56) References cited:
- EP-A1- 2 525 243
- KR-B1- 101 224 258
- US-A- 3 446 069
- US-A- 3 830 103
- US-A1- 2009 326 822

## Description

### TECHNICAL FIELD

The present invention is directed to an apparatus and method for Lagrangian measurements that can be used for measuring precipitation, monitoring climate, detecting and predicting floods, as well as other applications.

### BACKGROUND

An unmanned aerial vehicle (UAV), sometimes referred to as a drone, can be used for gathering various weather data. For example, a Predator B drone has been used to map flooded areas over Minnesota and South Dakota. Doppler radar techniques have also been used in conjunction with UAVs for rain detection. The prior art techniques for measuring and/or estimating rain and other weather/climate conditions are lacking for several reasons addressed by embodiments herein disclosed and described. As one example, numerical weather models typically fail to forecast convective storms. A prior art (aerial) vehicle comprising an array of dynamic force sensors for hail impact determination is disclosed in US 2009/0326822 A1.

### SUMMARY

According to the invention, a weather measurement system as specified in claim 1 is defined. In other embodiments, a server can be in communication with the aerial vehicle. The server can be configured to receive weather data and/or to receive dynamically estimated precipitation level from the aerial vehicle. The server can further be configured to estimate a three-dimensional rain map.

In yet other embodiments, the server can be in communication with the aerial vehicle and configured to receive the preprocessed data as well as perform an ensemble Kalman filtration of the preprocessed data to estimate a three-dimensional rain map. Further, according to the invention a method for dynamically estimating a three-dimensional rain map as specified in claim 4 is defined. In other embodiments, the aerial vehicle is one of a plurality of substantially similar aerial vehicles. Further, dynamically estimating the precipitation level can be based on measurements received from the plurality of aerial vehicles.

In yet other embodiments, a server can be in communication with the aerial vehicle. The server can receive weather data and the dynamically estimated precipitation level from the aerial vehicle. Based on these, the server can estimate a three-dimensional rain map. Dynamically estimating the precipitation level can also be based on extrinsic weather data to the aerial vehicle. The extrinsic weather data can be obtained from sources extrinsic to the aerial vehicle, such as from a satellite or from NOAA information. In some embodiments, the method can include utilizing an ensemble Kalman filter as part of generating a three-dimensional rain map based on the dynamically estimated precipitation level, the weather data, and/or the extrinsic weather data, i.e. external meteorological data.

### BRIEF DESCRIPTION OF THE DRAWINGS

The following drawings form part of the present specification and are included to further demonstrate certain aspects of systems and methods described herein, which may be better understood by reference to one or more of these drawings in combination with the detailed description of specific embodiments presented herein.
Figure 1 depicts an exemplary aircraft having an array of accelerometers.
Figure 2 depicts an exemplary method of estimating a three-dimensional rain map.

### DETAILED DESCRIPTION

Exemplary embodiments described, shown, and/or disclosed herein are not intended to limit the claims, but rather, are intended to instruct one of ordinary skill in the art as to various aspects of the invention. Other embodiments can be practiced and/or implemented without departing from the scope of the claimed invention.

UAVs can provide flexible weather sensor solutions capable of capturing highly sensitive weather information directly from locations of interest. UAVs can also operate in data sparse and data denied areas, as well as in hazardous conditions, darkness and other conditions that can pose significant risks to manned aircraft.

A flood and precipitation detection system can include an unmanned aerial vehicle (UAV). In a preferred embodiment, more than one UAV can be deployed to increase data collection. The UAV can be configured specifically for improving flood and precipitation sensing. For example, the UAV can include an array of accelerometers spanning the UAV. Individual accelerometers can be disposed, for example, on the outer surface of a wing. For wingless UAVs, the accelerometer can be placed on other structures. The accelerometers can be mounted in locations and/or in an overall configuration that can result in reliable sensor measurements.

The accelerometer system can be used in conjunction with or in place of a Doppler radar system. For example, a Doppler radar system can be mounted to each UAV. Data gathered from the Doppler radar can be analyzed with the accelerometer data, for example, through a fusion algorithm. A fusion algorithm can be performed onboard or by a central server. The central server can be ground-based or flight-based. Data from one or each of the subsystems can be assimilated for ensemble forecasting, such as through an ensemble Kalman filter, for rain rate estimations. In an alternative embodiment, the Doppler radar data can be processed to determine course and/or rough estimates and the accelerometer system can be utilized for finer measurements. In an embodiment, the server can receive data from the UAVs as well as from extrinsic sources, such as from satellites, radio, and/or the Internet. The estimation server can estimate the three dimensional rain map based on data from the UAVs as well as external meteorological data from extrinsic sources, for example from satellites. All of these data can be processed through the ensemble Kalman filter.

In an alternative embodiment, the accelerometer system can be further utilized to determine structural motion of the UAV, such as orientation, velocity, acceleration, torsion, and/or flexure. These measurements can be captured by separate and/or dedicated accelerometers, or by accelerometers utilized for precipitation measurements. In either case, the accelerometers can be used to aid in the estimation of the UAV structural motion and/or as aiding instruments.

Each UAV in the detection system can further include a processing unit, for example, a micro-controller or micro-processor. Advantageously, the processing unit can be incorporated into a UAV controller and/or processing unit to reduce cost and weight from the addition of a dedicated processor and circuitry. For example, the accelerator array can be interfaced with an on-board air data computer or UAV controller, in a fashion similar to an internal measurement unit (IMU), provided that the computational capability of the embedded computer is sufficient. Alternatively, the accelerometer system can be integrated with the IMU, and can thereby be integrated with a processor and/or embedded computer as part of the IMU componentry.

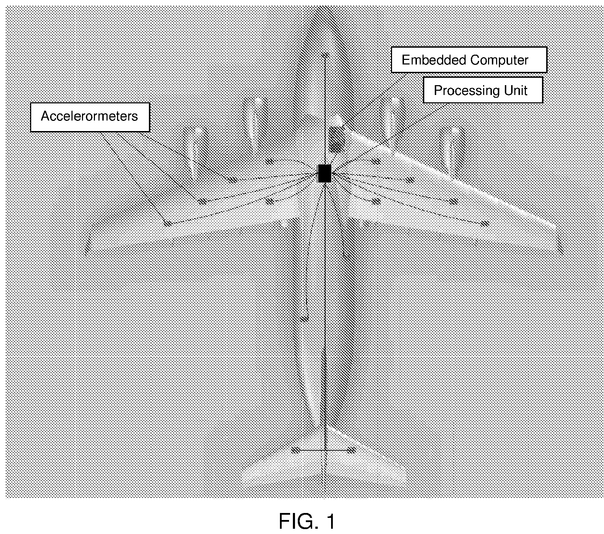

An exemplary embodiment of a UAV for flood and rain sensing can be seen depicted in Figure 1. As shown in the figure, several accelerometers can be distributed across the surface of the UAV. The accelerometers can communicate with a central processing unit. The processing unit can be connected to a separate embedded computer. In an alternative embodiment, the processing unit can be integrated physically or virtually with the embedded computer. Further, the embedded computer can be dedicated unit, or preferably, the embedded computer can be the computer of the systems of the UAV and a certain portion of the embedded computer's resource can be dedicated to the accelerometer system.

An important part of the system can include the accelerometer array that can be mounted in or on the UAV in such a way to guarantee relatively reliable senor measurements. The accelerometer array can be connected to an on-board processing unit that, for example, performs all required pre-processing of the sensors' measurements. Afterwards, the processed measurements can be transferred to an on-board embedded computer which has sufficient computational power to fuse these measurements with other model-based method. Such capability can provide in improved, dynamic precipitation level estimation. The system can provide sufficient data to forecast convective storms which can be responsible for heavy precipitation events. Thus, embodiments disclosed herein are superior to prior methods, such as traditional numerical weather models, which typically fail since convective instabilities cannot be well represented in prior models' initial conditions. Indeed, the various data sets that can be measured by the system and UAVs described herein, especially with respect to precipitation and winds, is unprecedented. Such information can be assimilated into weather models in real time for improved storm and rainfall forecasts, which can be crucial for reliable flooding predictions as well as efficient management of rescue plans. In addition to real-time measurements, the data can be stored and used to produce precipitation maps with increased accuracy, for example, for better planning and mitigation of future storm and flooding events and/or for improved agricultural research, planning, and analysis.

Individual accelerometers can include a mass, a spring, and a sensor. The mass and spring can be two components or configured as a single component that can accomplish corresponding inertial and restorative functions. Further, a mass-spring component can be integrated with a sensing element to for a single component. The accelerometer can be electrical, such as piezoelectric accelerometers, tunneling, and/or MEMS accelerometers. Further, the electrical accelerometers can advantageously be disposed in a cable array, which can connect the sensors serially and/or in parallel.

Alternatively or in addition to mass-spring accelerometers, individual accelerometers can include optical accelerometers, which can be lightweight, robust, and highly sensitive. In particular, fiber optic interferometric accelerometers can advantageously be designed for high responsiveness and low detection thresholds. Each optical accelerometer can include an interferometer. For example, each accelerometer can include a pair of fiber optic sensors separated by a length of optical fiber, forming the interferometer. Each sensor in the pair can reflect a narrow wavelength band of light having a central wavelength. Each accelerometer can operate at a different wavelength band and central wavelength such that the signals can be easily detected using wavelength division multiplexing (WDM) techniques. Alternatively, the signals can be separated in time using time division multiplexing (TDM). For further example, each accelerometer can be configured as a fiber optic gyroscope (FOG), interferometric fiber optic accelerometers based on linear and/or nonlinear transduction mechanisms, circular flexible disks, rubber mandrels and/or liquid-filled-mandrels.

Advantages of present embodiments are numerous. For example, the UAV and accelerometer system can be lightweight and easily transportable. It can be fully autonomous, i.e. a launch-and-leave system, or it can be remotely commanded. In addition to being remotely commanded, the UAV can be programmed to complete their mission autonomously in the event that contact with a control station is lost. In any of these cases, one or more UAVs can be prepared for launch and stored long before inclement weather is forecasted, such as heavy rain, wet roads, high wind, high water, fog, tornadoes and/or threats of hurricanes. The system can be employed without the threat of such conditions, for example, to gather longer-term climate data and/or weather phenomena.

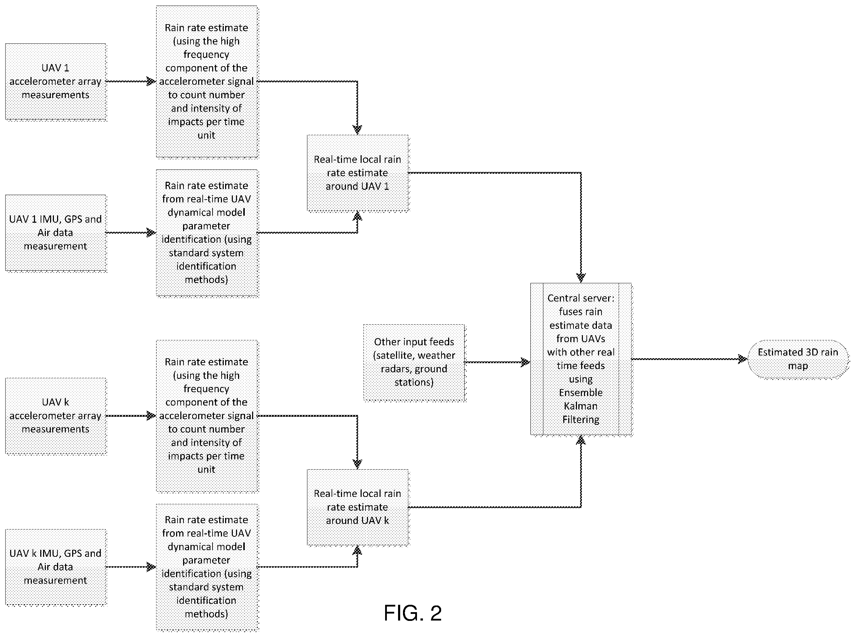

Figure 2 depicts an exemplary method. A first UAV (UAV 1) can have an accelerometer array. The accelerometer array can be utilized to measure a rain rate, for example, by using the high frequency component of the accelerometer signals and counting the number and intensity of impacts per unit of time. On-board and/or remote systems can determine rain rate estimates from the measurements.

Each of the UAVs can further include an internal measurement unit (IMU), for example, to measure, report, and/or record velocity, orientation, route, speed, gravitational force, air temperature, air humidity, atmospheric pressure, GPS information and/or other data of interest. In addition, the IMU can determine rain rate estimates, for example, from a real-time UAV dynamical model parameter identification. Data from the accelerometer array and from other IMU measurements can be utilized in concert, as suggested by Figure 2, to determine real-time raid rate estimates in the locality of the UAV.

The UAVs can be deployed in fleets, for example, UAV 1, UAV 2, and so on, through UAV k. Only UAV 1 and UAV k are shown in the flow chart. In addition to the data from the UAVs, other input feeds can be used to augment estimates, such as satellite, weather radar, and/or ground stations, as well as from weather services, such as weather information from the National Weather Service (NWS) and/or the National Oceanic and Atmospheric Administration (NOAA). Data from the UAVs, and optionally from other sources, can be sent to a central server for processing, such as with a data fusion process to generate an estimated three-dimensional map. In an embodiment, the server can estimate a three dimensional rain map based on data from the UAVs as well as external meteorological data from extrinsic sources, such as the above-mentioned sources and agencies. The rain map can be estimated based on ensemble Kalman filtering of the various data.

The Lagrangian method for describing dynamic system can be visualized as the tracking of balloons floating on the breeze. In contrast, the Eulerian method would construct an arbitrary volume fixed in space and then measure kinematics of the balloons with respect to the fixed volume. Although Eulerian descriptions can be useful to present embodiments, each UAV can be described as a Lagrangian drifter for convenience. The UAV can utilize communication systems, such as Argos, Orbcomm, Inmarsat, Iridium and the like, for example, to obtain position data. To achive this, UAV communication system can utilize a short burst data protocol and/or a bi-directional protocol. In another embodiment, a conventional mode of data transfer can include sending data from a UAV to a base station and then sending information to a satellite or other geographic information system (GIS). Additionally, the data stream can be compressed, for example, by using known techniques such as Gzip and zlib. By keeping communications short and/or compressed, power consumption can be reduced.

By incorporating accelerometers, weight increase to each UAV system can be negligible. Moreover, the system can estimate precipitation dynamically, to increase sensing precision and reduce uncertainty on flood data. Further, the UAV-based flood sensing system can operate independently from a weather radar (or other high resolution weather data), which can allow it to be deployed more easily.

The embodiments may take the form of a hardware embodiment, a software embodiment, or an embodiment combining software and hardware. In one embodiment, the present invention takes the form of a computer-program product that includes computer-useable instructions embodied on one or more computer-readable media.

The various integrated techniques, methods, and systems described herein can be implemented in part or in whole using computer-based systems and methods. Additionally, computer-based systems and methods can be used to augment or enhance the functionality described herein, increase the speed at which the functions can be performed, and provide additional features and aspects as a part of or in addition to those described elsewhere in this document. Various computer-based systems, methods and implementations in accordance with the described technology are presented below.

Embodiments may include a general-purpose computer and can have an internal or external memory for storing data and programs such as an operating system (e.g., DOS, Windows 2000™, Windows XP™, Windows NT™, OS/2, UNIX or Linux) and one or more application programs. Examples of application programs include computer programs implementing the techniques described herein for lyric and multimedia customization, authoring applications (e.g., word processing programs, database programs, spreadsheet programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer) capable of rendering standard Internet content and other content formatted according to standard protocols such as the Hypertext Transfer Protocol (HTTP). One or more of the application programs can be installed on the internal or external storage of the general-purpose computer. Alternatively, in another embodiment, application programs can be externally stored in or performed by one or more device(s) external to the general-purpose computer.

The general-purpose computer may include a central processing unit (CPU) for executing instructions in response to commands, and a communication device for sending and receiving data. One example of the communication device is a modem. Other examples include a transceiver, a communication card, an antenna, a network adapter, or some other mechanism capable of transmitting and receiving data over a communications link through a wired or wireless data pathway.

The general-purpose computer may also include an input/output interface that enables wired or wireless connection to various peripheral devices. Examples of peripheral devices include, but are not limited to, a mouse, a mobile phone, a personal digital assistant (PDA), a keyboard, a display monitor with or without a touch screen input, and an audiovisual input device. In another implementation, the peripheral devices may themselves include the functionality of the general-purpose computer. For example, the mobile phone or the PDA may include computing and networking capabilities and function as a general purpose computer by accessing a network and communicating with other computer systems. Examples of a network that can be utilized to implement various embodiments include the Internet, the World Wide Web, WANs, LANs, analog or digital wired and wireless telephone networks (e.g., Public Switched Telephone Network (PSTN), Integrated Services Digital Network (ISDN), and Digital Subscriber Line (xDSL)), radio, television, cable, or satellite systems, and other delivery mechanisms for carrying data. A communications link can include communication pathways that enable communications through one or more networks.

In one implementation, a processor-based system of the general-purpose computer can include a main memory, preferably random access memory (RAM), and can also include a secondary memory. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, Iomega Zip drive, etc. The removable storage drive can read from or write to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory can include other similar means for allowing computer programs or other instructions to be loaded into a computer system. Such means can include, for example, a removable storage unit and an interface. Examples of such can include a program cartridge and cartridge interface (such as the found in video game devices), a removable memory chip (such as an EPROM or PROM) and associated socket, and other removable storage units and interfaces, which allow software and data to be transferred from the removable storage unit to the computer system.

In one embodiment, a network can include a communications interface that allows software and data to be transferred between client devices, central servers, and other components. Examples of communications interfaces can include a modem, a network interface (such as, for example, an Ethernet card), a communications port, and a PCMCIA slot and card. Software and data transferred via a communications interface may be in the form of signals, which can be electronic, electromagnetic, optical or other signals capable of being received by a communications interface. These signals may be provided to a communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer readable medium" are generally used to refer to media such as a removable storage device, a disk capable of installation in a disk drive, and signals on a channel. These computer program products may provide software or program instructions to a computer system.

Computer-readable media include both volatile and nonvolatile media, removable and non-removable media, and contemplate media readable by a database, a switch, and various other network devices. Network switches, routers, and related components are conventional in nature, as are means of communicating with the same. By way of example, and not limitation, computer-readable media include computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, DVD, holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. An exemplary modulated data signal includes a carrier wave or other transport mechanism. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

In an embodiment where the elements are implemented using software, the software can be stored in, or transmitted via, a computer program product and loaded into a computer system using, for example, a removable storage drive, hard drive or communications interface. The control logic (software), when executed by the processor, may cause the processor to perform the functions of the techniques described herein.

In another embodiment, the elements may be implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements may be implanted using a combination of both hardware and software.

In another embodiment, the computer-based methods can be accessed or implemented over the World Wide Web by providing access via a Web Page to the methods described herein. Accordingly, the Web Page may be identified by a Universal Resource Locator (URL). The URL may denote both a server and a particular file or page on the server.

Each of the following references is hereby noted:
"Rain Rate Estimation with a Dual-Frequency Airborne Doppler Radar", accessible from the Internet at gest.umbc.edu/student_opp/201_gssp_reports/Chu_Tao.pdf.
"An Algorithm for Real Time Estimation of the Flexible UAV Structural Motions Using a Video-based System", accessible from the Internet at isif.org/fusion/proceedings/Fusion_2011/data/papers/213.pdf

## Claims

1. A weather measurement system, comprising:
an unmanned aerial vehicle having a surface;
an array of accelerometers disposed across the surface, wherein the accelerometers are configured to measure raindrops impacting the surface; and
a processing unit configured to receive measurement data from the array and to process the measurement data into preprocessed data; wherein the unmanned aerial vehicle comprises an internal measurement unit in communication with an embedded computer; and wherein the embedded computer is configured to fuse preprocessed data with information from the internal measurement unit and to determine real-time rain rate estimates in the locality of the unmanned aerial vehicle.

2. The system of claim 1, further comprising a server in communication with the unmanned aerial vehicle, wherein the server is configured to receive weather data and to receive dynamically estimated precipitation level from the unmanned aerial vehicle, and wherein the server is further configured to estimate a three-dimensional rain map.

3. The system of claim 1, further comprising a server in communication with the unmanned aerial vehicle, wherein the server is configured to receive the preprocessed data and perform an ensemble Kalman filtration of the preprocessed data to estimate a three-dimensional rain map.

4. A method for dynamically estimating a three-dimensional rain map, comprising the steps of:
counting numbers and intensities of raindrops with an array of accelerometers, wherein the raindrops are impacting a surface of an unmanned aerial vehicle, wherein the array is disposed across the surface, and wherein measuring the counting produces measurement data;
preprocessing the measurement data with a processing unit in order to generate preprocessed data;
performing a data fusion algorithm utilizing the preprocessed data and information from an internal measurement unit to generate fused data; and
determining real-time rain estimates in the locality of the unmanned aerial vehicle based on the fused data.

5. The method of claim 4, wherein a server is in communication with the unmanned aerial vehicle, and wherein the server receives weather data and the dynamically estimated precipitation level from the unmanned aerial vehicle, and the server therewith estimates a three-dimensional rain map.

6. The method of claim 4, wherein dynamically estimating a precipitation level is further based on extrinsic weather data to the unmanned aerial vehicle, wherein the extrinsic weather data is obtained from a source other than the unmanned aerial vehicle.

7. The method of claim 6, further comprising utilizing an ensemble Kalman filter in generating a three-dimensional rain map based on the dynamically estimated precipitation level, the weather data, and the extrinsic weather data.

8. The method of claim 4, wherein the unmanned aerial vehicle is one of a plurality of substantially similar unmanned aerial vehicles, and wherein dynamically estimating the precipitation level is further based on measurements from the plurality.

## Patentansprüche

1. Wettermesssystem, das umfasst:
ein unbemanntes Fluggerät mit einer Oberfläche;
eine Anordnung von Beschleunigungssensoren, die über die Oberfläche angeordnet sind, wobei die Beschleunigungssensoren so konfiguriert sind, dass sie auf die Oberfläche auftreffende Regentropfen messen; und
eine Verarbeitungseinheit, die so konfiguriert ist, dass sie Messdaten von der Anordnung empfängt und die Messdaten zu vorverarbeiteten Daten verarbeitet; wobei das unbemannte Fluggerät eine interne Messeinheit in Kommunikation mit einem eingebetteten Computer umfasst; und wobei der eingebettete Computer so konfiguriert ist, dass er vorverarbeitete Daten mit Informationen aus der internen Messeinheit fusioniert und Echtzeit-Regenraten-Schätzwerte in der Örtlichkeit des unbemannten Fluggeräts ermittelt.

2. System nach Anspruch 1, das ferner einen Server in Kommunikation mit dem unbemannten Fluggerät umfasst, wobei der Server so konfiguriert ist, dass er Wetterdaten empfängt und dynamisch geschätzte Niederschlagshöhen vom unbemannten Fluggerät empfängt, und wobei der Server ferner so konfiguriert ist, dass er eine dreidimensionale Regenkarte schätzt.

3. System nach Anspruch 1, das ferner einen Server in Kommunikation mit dem unbemannten Fluggerät umfasst, wobei der Server so konfiguriert ist, dass er die vorverarbeiteten Daten empfängt und eine Ensemble-Kalman-Filterung an den vorverarbeiteten Daten durchführt, um eine dreidimensionale Regenkarte zu schätzen.

4. Verfahren zum dynamischen Schätzen einer dreidimensionalen Regenkarte, das die Schritte umfasst:
Zählen von Anzahlen und Intensitäten von Regentropfen mit einer Anordnung von Beschleunigungssensoren, wobei die Regentropfen auf eine Oberfläche eines unbemannten Fluggeräts auftreffen, wobei die Anordnung über die Oberfläche angeordnet ist, und wobei das Messen der Zählung Messdaten generiert;
Vorverarbeiten der Messdaten mit einer Verarbeitungseinheit, um vorverarbeitete Daten zu generieren;
Durchführen eines Datenfusionsalgorithmus unter Verwendung der vorverarbeiteten Daten und Informationen aus einer internen Messeinheit, um fusionierte Daten zu generieren; und
Ermitteln von Echtzeit-Regenschätzwerten in der Örtlichkeit des unbemannten Fluggeräts auf Basis der fusionierten Daten.

5. Verfahren nach Anspruch 4, wobei ein Server in Kommunikation mit dem unbemannten Fluggerät steht,
und wobei der Server Wetterdaten und die dynamisch geschätzte Niederschlagshöhe vom unbemannten Fluggerät empfängt und der Server damit eine dreidimensionale Regenkarte schätzt.

6. Verfahren nach Anspruch 4, wobei das dynamische Schätzen einer Niederschlagshöhe ferner auf extrinsischen Wetterdaten an das unbemannte Fluggerät basiert, wobei die extrinsischen Wetterdaten von einer anderen Quelle als dem unbemannten Fluggerät erhalten werden.

7. Verfahren nach Anspruch 6, das ferner das Verwenden eines Ensemble-Kalman-Filters beim Erzeugen einer dreidimensionalen Regenkarte auf Basis der dynamisch geschätzten Niederschlagshöhe, der Wetterdaten und der extrinsischen Wetterdaten umfasst.

8. Verfahren nach Anspruch 4, wobei das unbemannte Fluggerät eines von einer Mehrzahl von im Wesentlichen ähnlichen unbemannten Fluggeräten ist und wobei das dynamische Schätzen der Niederschlagshöhe ferner auf Messungen von der Mehrzahl basiert.

## Revendications

1. Système de mesures météorologiques, comprenant :
un véhicule aérien sans pilote ayant une surface ;
un réseau d'accéléromètres disposés sur la surface, les accéléromètres étant configurés pour mesurer les gouttes de pluie qui heurtent la surface ; et
une unité de traitement configurée pour recevoir les données des mesures de la part du réseau et pour traiter les données des mesures en donnée prétraitées ; dans lequel le véhicule aérien sans pilote comprend une unité de mesure interne en communication avec un ordinateur intégré ; et dans lequel l'ordinateur intégré est configuré pour fusionner les données prétraitées avec les informations provenant de l'unité de mesure interne et pour déterminer des estimations de taux de pluie en temps réel dans la localité du véhicule aérien sans pilote.

2. Système selon la revendication 1, comprenant en outre un serveur en communication avec le véhicule aérien sans pilote, dans lequel le serveur est configuré pour recevoir des données météorologiques et pour recevoir un niveau de précipitations estimé de manière dynamique de la part du véhicule aérien sans pilote, et dans lequel le serveur est en outre configuré pour estimer une carte de pluie en trois dimensions.

3. Système selon la revendication 1, comprenant en outre un serveur en communication avec le véhicule aérien sans pilote, dans lequel le serveur est configuré pour recevoir les données prétraitées et pour effectuer un filtrage Kalman d'ensemble des données prétraitées pour estimer une carte de pluie en trois dimensions.

4. Procédé d'estimation dynamique d'une carte de pluie en trois dimensions, comprenant les étapes de :
comptage du nombre et de l'intensité des gouttes de pluie au moyen d'un réseau d'accéléromètres, les gouttes de pluie heurtant une surface d'un véhicule aérien sans pilote, le réseau étant disposé sur la surface, et la mesure du comptage produisant des données de mesure ;
prétraitement des données de mesure avec une unité de traitement afin de générer des données prétraitées ;
exécution d'un algorithme de fusion de données en utilisant les données prétraitées et les informations provenant d'une unité de mesure interne afin de générer des données fusionnées ; et
détermination d'estimations de pluie en temps réel dans la localité du véhicule aérien sans pilote en fonction des données fusionnées.

5. Procédé selon la revendication 4, dans lequel un serveur est en communication avec le véhicule aérien sans pilote,
et dans lequel le serveur reçoit les données météorologiques et le niveau de précipitations estimé de manière dynamique de la part du véhicule aérien sans pilote, et le serveur estime ainsi une carte de pluie en trois dimensions.

6. Procédé selon la revendication 4, dans lequel l'estimation dynamique d'un niveau de précipitations repose en outre sur les données météorologiques extrinsèques au véhicule aérien sans pilote, les données météorologiques extrinsèques étant obtenues de la part d'une source autre que le véhicule aérien sans pilote.

7. Procédé selon la revendication 6, comprenant en outre l'utilisation d'un filtrage Kalman d'ensemble lors de la génération d'une carte de pluie en trois dimensions sur la base du niveau de précipitations estimé de manière dynamique, des données météorologiques, et des données météorologiques extrinsèques.

8. Procédé selon la revendication 4, dans lequel le véhicule aérien sans pilote est l'un d'une pluralité de véhicules aériens sans pilote sensiblement similaires, et dans lequel l'estimation dynamique du niveau de précipitations repose en outre sur les mesures provenant de la pluralité.
